# EUROPÄISCHE PATENTSCHRIFT

(11) **EP 0 509 356 B1**
(45) Veröffentlichungstag und Bekanntmachung des Hinweises auf die Patenterteilung: **30.08.1995**
(21) Anmeldenummer: 92105891.3
(22) Anmeldetag: 06.04.1992
(51) Int. Cl.: F16B 13/14

(54) **Verbundanker mit wasserhärtender Polymerzubereitung**
Compound anchoring element with water-hardening polymer composition
Dispositif d'encrage composite à composition de polymère durcissable à l'eau

(30) Priorität: 17.04.1991 DE 4112531
(43) Veröffentlichungstag der Anmeldung: 21.10.1992
(73) Patentinhaber: BAYER AG, 51368 Leverkusen (DE)
(72) Erfinder: Stepanski, Horst, Dr., W-5090 Leverkusen 3 (DE); Arend, Günter, Dr., W-4047 Dormagen (DE); Jansen, Bernhard, Dr., W-5000 Köln 80 (DE)

(56) Entgegenhaltungen:
- DE-A- 2 625 492
- DE-A- 3 221 046
- DE-C- 629 335
- FR-A- 2 096 653
- GB-A- 470 761

## Beschreibung

Die Erfindung betrifft mit Hilfe wasserhärtender Polymerzubereitungen einklebbare Verbundanker für die Verwendung in Beton oder Mauerwerk, ein Verfahren zur Herstellung entsprechender Verbundanker sowie ihre Verwendung.

Aus DE-C-629 335 ist ein Verfahren zur Befestigung von Schrauben, Haken, Nägeln oder dergleichen in vorher hergestellten Bohrlöchern des Mauerwerkes mittels mit Gips durchsetzten Gewebes bekannt. Eine Möglichkeit der Befestigung besteht darin, daß der Schrauben- bzw. Nagelschaft mit einem gipshaltigen Gewebe umwickelt wird und diese umwickelte Schraube bzw. dieser umwickelte Nagel dann in das vorgefertigte Bohrloch eingebracht wird. Nach der Lehre von DE 629 335 kann das gipshaltige Gewebe in einfacher Weise dadurch hergestellt werden, daß beispielsweise ein Baumwollgewebestück gleichmäßig mit Gipspulver eingestreut wird, dem zur besseren Anbindung noch andere chemische Stoffe wie z.B. Alaun zugesetzt werden können, wie dies bei den in der Orthopädie bekannten Gipsbinden der Fall ist. Die nach diesem Verfahren befestigten Schrauben, Haken oder Nägel besitzen jedoch nur eine beschränkte Belastbarkeit. Außerdem braucht der Gips längere Zeit um richtig auszuhärten und das Arbeiten mit Gips ist technisch aufwendig.

Die erfindungsgemäßen Verbundanker bestehen aus einem Metallstab, der Ankerstange, der mit einem textilen Material ummantelt ist, welches mit einem feuchtigkeitshärtenden Polyurethanharz getränkt ist. Dieser erfindungsgemäße Verbundanker wird durch Eintauchen in Wasser aktiviert und kann dann in eine entsprechend dimensionierte Bohrung gesetzt werden. Die Aushärtezeit des Polyurethanharzes bestimmt die Länge der Zeit, nach welcher der Anker belastet werden kann. Nach dem Aushärten besitzt der Anker die geforderte Belastbarkeit.

Das ist für den Fachmann um so bemerkenswerter, als wasserhärtende Polyurethansysteme eines bestimmten Isocyanatgehaltes im allgemeinen bedingt durch die CO₂-Entwicklung zum Schäumen neigen. Die zellige Struktur des Schaumes hat dann meist eine drastische Reduzierung der Festigkeitseigenschaften zur Folge.

Im vorliegenden Anwendungsfall jedoch kann das Harz wegen des durch die Bohrung begrenzten Volumens nicht frei aufschäumen. Nachdem das verfügbare freie Volumen ausgefüllt worden ist, baut sich ein Schäumdruck auf, der zum einen eine gute Benetzung und Penetration der Bohrungsoberfläche bewirkt, zum anderen einem weiteren Aufblähen entgegenwirkt. Lediglich in den Randzonen der Klebung ist eine allerdings geringe einachsige Expansion möglich. Die hierdurch zwangsläufig bewirkte geringere Schubsteifigkeit wirkt sich wegen der großen tragenden Länge der Klebung eher positiv im Sinne eines Abbaues von Spannungsspitzen aus. Dies verbessert sowohl das Tragverhalten der Klebung als auch des Metallankers.

Die bisher bekannten Verbundankersysteme beruhen auf polymerisierbaren Massen, welche nach Monomer und Katalysator getrennt in Zweikammer-Glaspatronen in den Handel kommen. Diese sogenannten Mörtelpatronen werden in das Bohrloch eingebracht. Dann wird die Ankerstange mit Hilfe einer Schlagbohrmaschine eingetrieben. Dabei wird das Glas der Mörtelpatrone zertrümmert und durch inniges Vermischen der Komponenten die Abbindereaktion gestartet (vergl. z.B. Literatur 1. Mauthe, P., Neue Verbundanker-Generation mit Epoxyacrylat, Schweizer Ingenieur und Architekt (1987) H. 13, 2. Lang, G., Festigkeitseigenschaften von Verbundanker-Systemen, Bauingenieur 54 (1979), S. 41-46, 3. Sell R., Über Fertigkeit und Verformung mit Reaktionsharzmörtelpatronen versetzter Betonanker, Verbindungstechnik 5 (1973), H. 8., S. 11-16, 4. Klöker, W., Auf Reaktionsharzbasis spreizdruckfrei verankern, Verbindungstechnik 9 (1977) H. 9., S. 37-42, 5. Schuermann, F. et. al., Die Weiterentwicklung des Klebeankers, Glück auf, 106, (1970) 24, S. 1145-1151).

Derzeit sind in der Praxis zwei chemisch unterschiedliche Systeme im Einsatz:
a) radikalisch polymerisierende ungesättigte Polyesterharze
b) radikalisch polymerisierende Epoxyacrylate
Beiden Systemen gemeinsam ist die Esterfunktion im "Backbone" des Polymernetzwerkes, welche verseifungsgefährdet ist. Diese Gefahr besteht bei Polyether-Polyurethanen nicht. Dies verdient eine besondere Beachtung, weil Beton und Mörtel stark alkalisch sind.

Das erfindungsgemäß mit dem Polyurethanharz getränkte textile Trägermaterial verstärkt das Harz und wirkt einem Kriechen unter Last entgegen. Dieser Effekt ist besonders ausgeprägt, wenn z.B. Glasfasern eingesetzt werden.

Das Ummanteln des Ankers ist fertigungstechnisch einfacher als die Herstellung der Zweikammer-Glasampullen.

Bei den konventionellen Systemen kann es bei unsorgfältiger Arbeit zu Fehlern durch exzentrisches Einfügen des Ankers kommen. Der textile Träger der erfindungsgemäßen Anker bewirkt hingegen eine sichere Zentrierung.

Durch falsche Lagerung oder Beschädigung angelierte konventionelle Mörtelpatronen sind nur bei sorgfältiger Kontrolle erkennbar. Die erfindungsgemäßen Anker können hingegen in einem analogen Fall wegen der Aushärtung und Volumenzunahme des Harzes unmöglich gesetzt werden. Fehlklebungen werden dadurch sicher vermieden.

Bei den konventionellen Mörtelpatronen muß die zum Eintreiben dienende Bohrmaschine bei Erreichen des Bohrlochtiefsten sofort abgestellt werden. Geschieht dies zu früh, sitzt der Anker falsch und der Klebemörtel ist nicht hinreichend vermischt; geschieht dies zu spät, wird der Mörtel aus der Bohrung herausgefördert.

Die erfindungsgemäßen Verbundanker sind im Unterschied zu der üblichen Technik nicht auf den Einsatz in Sacklöchern beschränkt, sondern können z.B. auch in durchgehenden Bohrungen eingesetzt werden.

Da die Anker nicht mit der Bohrmaschine gesetzt werden brauchen, ist auch der Einsatz an schwer zugänglichen Stellen möglich. Zudem besteht größere Freiheit bei der Gestalt der Anker, So sind z.B. Haken und Ösen ausführbar.

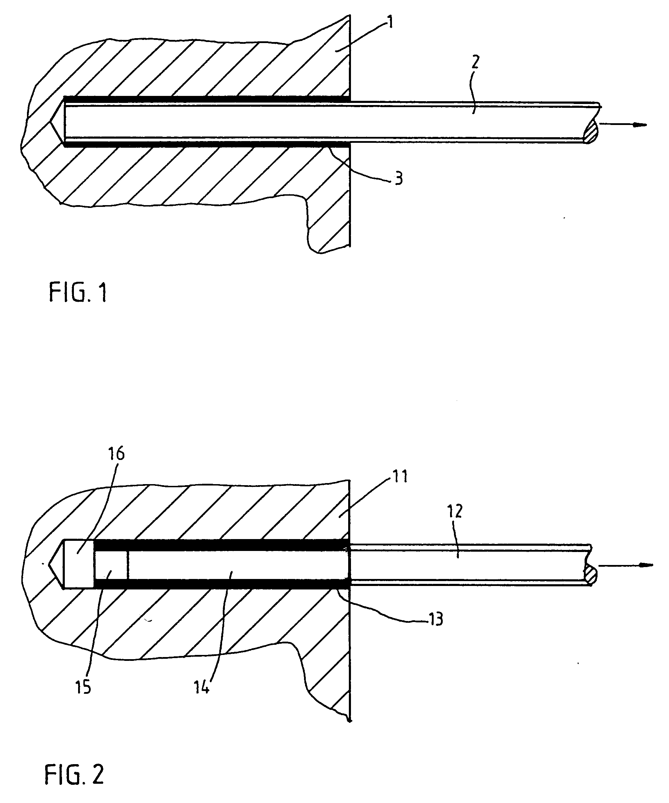

Für die konstruktive Ausführung des Verbundankers kommen zwei unterschiedliche Varianten in Frage. Bei der 1. Variante (Fig. 1) wird eine konventionelle Zugankerstange mit einem z.B, über die gesamte Länge reichenden Gewinde verwendet.

Ein besonders günstiges Tragverhalten läßt sich erreichen, wenn zwischen Ankerstange und Polyurethanharz eine Trennschicht ein Abgleiten ermöglicht, so daß die Zugkraft in der Ankerstange bis zu einem Kopf im Innersten der Bohrung geleitet wird (Variante gemäß Fig. 2). Die Krafteinleitung von der Ankerstange zur harzgetränkten Ummantelung wird durch einen Formschluß am Kopf der Ankerstange gewährleistet. Beim Anziehen der Verschraubung oder durch eine betriebsmäßig auftretende Zugkraft wird die an der Wandung des Bohrloches haftende Ummantelung gestaucht und hierdurch analog zu mechanischen Spreizdübeln eine Klemmwirkung außerhalb der wegen möglicher Zugbiegespannungen kritischen äußeren Randzone bewirkt.

Diese oben erwähnte Trennschicht stellt eine antiadhäsive Ausrüstung dar. Diese antiadhäsive Ausrüstung kann eine Beschichtung der Ankerstange sein. Dafür kommen alle Materialien in Frage, die für Polymethanharze adhäsiv sind, insbesondere Polyolefine, Silicone, Fluorpolymere sowie Wachse synthetischer oder natürlicher Herkunft. Außerdem kann die antiadhäsive Ausrüstung in einer gegenüber der Ankerstange gleitfähigen, dünnwandigen Hülse bestehen, die einen direkten Kontakt des Polymethanharzes zur Ankerstange **verhindert. Diese Hülse** kann z.B. bestehen aus beschichtetem Papier, Kunststoff- oder Metallfolien, Schläuchen oder Röhrchen.

Schematisch sollen die beiden Systeme anhand der Fig. 1 und 2 näher erläutert werden.

Dabei bedeuten in Fig. 1
1 Beton bzw. Mauerwerk
2 Gewindestange (Ankerstange)
3 faserverstärktes Polyurethanharz
und in Fig. 2
11 Beton bzw. Mauerwerk
12 Gewindestange (Ankerstange)
13 faserverstärktes Polyurethanharz
14 antiadhäsive Ausrüstung
15 Adhäsionsbereich
16 Ankerkopf
Als wasserhärtende Polyurethane kommen erfindungsgemäß alle an sich bekannten organischen Polyisocyanate in Frage, d.h. beliebige Verbindungen bzw. Gemische von Verbindungen, die pro Molekül mindestens zwei organisch gebundene Isocyanatgruppen aufweisen. Hierzu gehören sowohl niedermolekulare Polyisocyanate mit einem unter 400 liegenden Molekulargewicht als auch Modifizierungsprodukte derartiger niedermolekularer Polyisocyanate mit einem aus der Funktionalität und dem Gehalt an funktionellen Gruppen berechenbaren, z.B. 400 bis 10.000, vorzugsweise 600 bis 8.000, und insbesondere 800 bis 5.000, betragenden Molekulargewicht. Geeignete niedermolekulare Polyisocyanate sind beispielsweise solche der Formel

Q (NCO)ₙ,

in der
- n: 2 bis 4, vorzugsweise 2 bis 3, und
- Q: einen aliphatischen Kohlenwasserstoffrest mit 2 bis 18, vorzugsweise 6 bis 10 C-Atomen, einen cycloaliphatischen Kohlenwasserstoffrest mit 4 bis 15, vorzugsweise 5 bis 10 C-Atomen, einen aromatischen Kohlenwasserstoffrest mit 6 bis 15, vorzugsweise 6 bis 13 C-Atomen oder einen araliphatischen Kohlenwasserstoffrest mit 8 bis 15, vorzugsweise 8 bis 13 C-Atomen
bedeuten.

Geeignete derartige niedermolekulare Polyisocyanate sind z.B. Hexamethylendiisocyanat, 1,12-Dodecandiisocyanat, Cyclobutan-1,3-diisocyanat, Cyclohexan-1,3- und -1,4-diisocyanat sowie beliebige Gemische dieser Isomeren, 1-Isocyanato-3,3,5-trimethyl-5-isocyanatomethylcyclohexan, 2,4- und 2,6-Hexahydrotoluylendiisocyanat sowie beliebige Gemische dieser Isomeren, Hexahydro-1,3- und/oder -1,4-phenylendiisocyanat, Perhydro-2,4'- und/oder -4,4'-diphenylmethan-diisocyanat, 1,3- und 1,4-Phenylendiisocyanat, 2,4- und 2,6-Toluylendiisocyanat sowie beliebige Gemische dieser Isomeren, Diphenylmethan-2,4'- und/oder -4,4'-diisocyanat, Naphthylen-1,5-diisocyanat, Triphenylmethan-4,4',4''-triisocyanat oder Polyphenyl-polymethylenpolyisocyanate, wie sie durch Anilin-Formaldehyd-Kondensation und anschließende Phosgenierung erhalten werden.

Geeignete höhermolekulare Polyisocyanate sind Modifizierungsprodukte derartiger einfacher Polyisocyanate, d.h. Polyisocyanate mit z.B. Isocyanurat-, Carbodiimid-, Allophanat-, Biuret- oder Uretdion-Struktureinheiten, wie sie nach an sich bekannten Verfahren des Standes der Technik aus den beispielhaft genannten einfachen Polyisocyanaten der oben genannten allgemeinen Formel hergestellt werden können. Unter den höhermolekularen, modifizierten Polyisocyanaten sind insbesondere die aus der Polyurethanchemie bekannten Prepolymeren mit endständigen Isocyanatgruppen des Molekulargewichtsbereichs 400 bis 10.000, vorzugsweise 600 bis 8.000 und insbesondere 800 bis 5.000, von Interesse, Diese Verbindungen werden in an sich bekannter Weise durch Umsetzung von überschüssigen Mengen an einfachen Polyisocyanaten der beispielhaft genannten Art mit organischen Verbindungen mit mindestens zwei gegenüber Isocyanatgruppen reaktionsfähigen Gruppen, insbesondere organischen Polyhydroxylverbindungen hergestellt. Geeignete derartige Polyhydroxylverbindungen sind sowohl einfache mehrwertige Alkohole wie z.B. Ethylenglykol, Trimethylolpropan, Propandiol-1,2 oder Butandiol-1,2, insbesondere jedoch höhermolekulare Polyetherpolyole und/oder Polyesterpolyole der aus der Polyurethanchemie an sich bekannten Art mit Molekulargewichten von 600 bis 8.000, vorzugsweise 800 bis 4.000, die mindestens zwei, in der Regel 2 bis 8, vorzugsweise aber 2 bis 4 primäre und/oder sekundäre Hydroxylgruppen aufweisen, Selbstverständlich können auch solche NCO-Prepolymere eingesetzt werden, die beispielsweise aus niedermolekularen Polyisocyanaten der beispielhaft genannten Art und weniger bevorzugten Verbindungen mit gegenüber Isocyanatgruppen reaktionsfähigen Gruppen wie z.B. Polythioetherpolyolen, Hydroxylgruppen aufweisenden Polyacetalen, Polyhydroxypolycarbonaten, Hydroxylgruppen aufweisenden Polyesteramiden oder Hydroxylgruppen aufweisenden Copolymerisaten olefinisch ungesättigter Verbindungen erhalten worden sind. Zur Herstellung der NCO-Prepolymeren geeignete Verbindungen mit gegenüber Isocyanatgruppen reaktionsfähigen Gruppen, insbesondere Hydroxylgruppen, sind beispielsweise die in US 4 218 543, Kolonne 7, Zeile 29 bis Kolonne 9, Zeile 25 beispielhaft offenbarten Verbindungen. Bei der Herstellung der NCO-Prepolymeren werden diese Verbindungen mit gegenüber Isocyanatgruppen reaktionsfähigen Gruppen mit einfachen Polyisocyanaten der oben beispielhaft genannten Art unter Einhaltung eines NCO/OH-Äquivalentverhältnisses von >1 zur Umsetzung gebracht. Die NCO-Prepolymeren weisen im allgemeinen einen NCO-Gehalt von 2,5 bis 30, vorzugsweise 6 bis 25 Gew.-% auf. Hieraus geht bereits hervor, daß im Rahmen der vorliegenden Erfindung unter "NCO-Prepolymeren" bzw. unter "Prepolymeren mit endständigen Isocyanatgruppen" sowohl die Umsetzungsprodukte als solche als auch ihre Gemische mit überschüssigen Mengen an nicht umgesetzten Ausgangspolyisocyanaten, die oft auch als "Semiprepolymer" bezeichnet werden, zu verstehen sind.

Besonders bevorzugte Polyisocyanatkomponenten sind die in der Polyurethanchemie üblichen technischen Polyisocyanate, d.h. Hexamethylendiisocyanat, 1-Isocyanato-3,3,5-trimethyl-5-isocyanatomethyl-cyclohexan (Isophorondiisocyanat, abgekürzt: IPDI), 4,4'-Diisocyanato-dicyclohexylmethan, 4,4'-Diisocyanatodiphenylmethan, dessen Gemische mit den entsprechenden 2,4'- und 2,2'-Isomeren, Polyisocyanatgemische der Diphenylmethanreihe wie sie durch Phosgenierung von Anilin/Formaldehyd-Kondensaten in an sich bekannter Weise gewonnen werden können, die Biuret- oder Isocyanuratgruppen aufweisenden Modifizierungsprodukte dieser technischen Polyisocyanate und insbesondere NCO-Prepolymere der genannten Art auf Basis dieser technischen Polyisocyanate einerseits und den beispielhaft genannten einfachen Polyolen und/oder Polyetherpolyolen und/oder Polyesterpolyolen andererseits, sowie beliebige Gemische derartiger Polyisocyanate. Isocyanate mit aromatisch gebundenen NCO-Gruppen sind erfindungsgemäß bevorzugt. Eine besonders bevorzugte Polyisocyanat-Komponente stellt teilweise carbodiimidisiertes Diisocyanatodiphenylmethan dar, welches infolge Anlagerung von monomerem Diisocyanat an die Carbodiimid-Struktur auch Uretonimingruppen aufweist.

Die wasserhärtenden Polyurethane können an sich bekannte Katalysatoren enthalten. Insbesondere können dies tert. Amine sein, die die Isocyanat/Wasser-Reaktion und nicht eine Selbstreaktion (Trimerisierung, Allophanatisierung) katalysieren (DE-A 23 57 931). Als Beispiele seien genannt tert. aminhaltige Polyether (DE-A 26 51 089), niedermolekulare tert. Amine, wie 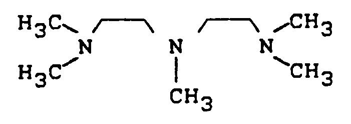
oder Dimorpholindiethylether oder Bis-(2,6-dimethylmorpholino)-diethylether (WO 86/01397). Der Gehalt an Katalysator bezogen auf den tert.-Stickstoff beträgt im allgemeinen 0,05 bis 0,5 Gew.-% bezogen auf das Polymerharz.

Die wasserhärtenden Polymerzubereitungen können an sich bekannte Zusatzmittel enthalten, wie z.B. Verlaufshilfsmittel, Thixotropiermittel, Entschäumer und Gleit mittel.

Weiterhin können die Kunststoffharze eingefärbt sein oder, falls erwünscht, UV-Stabilisatoren enthalten.

Als Zusatzmittel seien beispielsweise genannt: Polydimethylsiloxane, Calciumsilikate vom Aerosil-Typ, Polywachse (Polyethylenglykole), UV-Stabilisatoren vom Ionol-Typ (DE-A 29 21 163), Farbpigmente, wie Ruß, Eisenoxide, Titandioxid oder Phthalocyanine.

Die insbesondere für Polyurethan-Prepolymere geeigneten Zusatzmittel sind im Kunststoff-Handbuch, Band 7, Polyurethane, Seiten 100 bis 109 (1983) beschrieben. Sie werden im allgemeinen in einer Menge von 0,5 bis 5 % (bezogen auf das Harz) zugesetzt.

Als Trägermaterialien kommen poröse Folien oder auch Schaumstoffe aus natürlichen oder synthetischen Materialien (z.B. Polyurethan), in erster Linie Gebilde auf textiler Basis in Betracht, vorzugsweise mit einem Flächengewicht von 20 bis 1.000 g/m², insbesondere von 30 bis 500 g/m². Als textile Gebilde seien beispielsweise genannt:
1. Textile Gewebe, Gewirke oder Gestricke eines Flächengewichts von 20 bis 200 g/m², vorzugsweise 40 bis 100 g/m², mit einer Fadenzahl von vorzugsweise 2 bis 20 Fäden je laufenden Zentimeter in der Längs- und Querrichtung. Das textile Gewebe oder Gewirke kann aus beliebigen natürlichen oder synthetischen Garnen hergestellt sein, Vorzugsweise werden jedoch Gewebe oder Gewirke eingesetzt, die aus Baumwollgarnen oder aus Mischgarnen hergestellt worden sind, die ihrerseits sowohl aus hydrophoben Fäden bzw. Fasern eines hohen E-Moduls (beispielsweise Polyester) und hydrophilen natürlichen oder synthetischen Fäden bzw. Fasern (beispielsweise Baumwolle oder Polyamid) erhalten worden sind.
2. Glasfasergewebe, -gewirke oder -gestricke eines Flächengewichts von 60 bis 500 g/m², vorzugsweise 100 bis 400 g/m², hergestellt aus Glasfasergarnen mit einem E-Modul von 7.000 bis 9.000 (daN/mm²), und einer Fadenzahl von 3 bis 10, bevorzugt 5 bis 7 in Längsrichtung und mit einer Fadenzahl von 3 bis 10, bevorzugt 4 bis 6 in Querrichtung je Zentimeter Glasfasergewebe, die durch eine spezielle Art der Hitzebehandlung eine Längenelastizität von 10 bis 30 % besitzen, sind bevorzugt. Die Gewirke können sowohl geschlichtet als auch ungeschlichtet sein.
3. Nicht gebundene oder gebundene oder genadelte Vliese auf Basis von anorganischen und vorzugsweise organischen Fasern eines Flächengewichts von 30 bis 400 g/m², vorzugsweise 50 bis 200 g/m².

Bei den erfindungsgemäßen mit wasserhärtenden Polyurethanharzen beschichteten Verbundankern ist das Trägermaterial mit einer Menge von 25 bis 200 Gew.-%, bevorzugt von 30 bis 180 Gew.-%, an wasserhärtender Polymerzubereitung, bezogen auf das gesamte Material, beschichtet und/oder imprägniert.

Gegenstand der Erfindung ist auch ein Verfahren zur Herstellung wasserhärtender Polymerzubereitungen für Konstruktionsmaterialien, welches dadurch gekennzeichnet ist, daß man ein wasserhärtendes Reaktivharz mit Katalysatoren und weiteren Hilfs- und Zusatzmitteln vermischt und dann homogen über die Fläche des Trägermaterials verteilt.

Die so erhaltenen, mit wasserhärtendem Polyurethanharz beschichteten Trägermaterialien werden dann auf die zugeschnittenen Ankerstangen aufgerollt und in einer luft- und wasserdichten Folie (z.B. aus Kunststoff-Aluminium-Laminat) oder anderen völlig dichten Behältern versiegelt, wie sie in der DE-A 23 57 931 und DE-A 26 51 089 beschrieben werden.

Es ist ebenfalls möglich, die mit dem Trägermaterial umwickelte Ankerstange zwecks Beschichtung mit dem wasserhärtenden Polyurethanharz in dasselbe Polyurethanharz einzutauchen und überschüssiges, anhaftendes Harz abfließen zu lassen.

Bei beiden erfindungsgemäßen Verfahren arbeitet man unter Ausschluß von Feuchtigkeit. Bevorzugt wird bei einer relativen Feuchte < 1 % (bei 21°C), besonders bevorzugt bei < 0,5 % (bei 21°C), gearbeitet.

Für die Beschichtung bzw. Imprägnierung kann die Polymerzubereitung in einem inerten Lösungsmittel gelöst sein, das nach dem Beschichtungsvorgang wieder abgezogen wird.

Inerte Lösungsmittel können beispielsweise chlorierte Kohlenwasserstoffe, wie Methylenchlorid, Trichlorethan oder Chloroform, Ketone wie Aceton und Methylethylketon, Ester wie Essigsäureethylester und Butylacetat, Aromaten wie Toluol, Xylol oder entsprechende derivatisierte Typen, die keinen Zerewitinoff-aktiven Wasserstoff besitzen, sein.

Der Gegenstand der Erfindung soll anhand der folgenden Beispiele näher erläutert werden:

### Beispiel 1

### Herstellung des feuchtigkeitshärtenden Polyurethanharzes

220 Teile 4,4'-Bisisocyanatodiphenylmethan, welches Carbodimid-Anteile enthält (NCO-Gehalt 30 %), werden bei Raumtemperatur zugegeben zu einem Gemisch von 56 Teilen eines Polypropylenglykols der OH-Zahl 112, 38 Teile eines auf Trimethylolpropan gestarteten Polyethers, propoxyliert mit 3,2 % Propylenoxid und anschließend ethoxyliert mit 96,8 % Ethylenoxid, 0,1 Teil Benzoylchlorid und 6 Teilen 2,2'-Dimorpholinodiethylether. Das Reaktionsgemisch erwärmt sich von selbst und wird gerührt, bis der Isocyanatgehalt 15,6 % beträgt. Das fertige Prepolymer hat eine Dichte von 1,1 g/cm³ und eine Viskosität η₂₅ von 3686 mPa.s.

### Beispiel 2

### Herstellung eines polyurethanharzgetränkten Glasfasergemisches

Zur Herstellung eines erfindungsgemäßen polyurethanharzgetränkten Glasfasergemisches (unbehandelt: 9 cm Breite, Quadratmetergewicht 200 g/m²) wird eine Rolle des Gemisches mit einer 150 % des Gewichtes (bezogen auf das unbeharzte Trägermaterial) betragende der Menge des Polymethanharzes aus Beispiel 1, gelöst in Methylchlorid getränkt. Im Anschluß wird das Lösungsmittel im Vakuum abgezogen. Auf diese Weise entsteht ein beharztes Glasfasergemisch, das zur Herstellung der erfindungsgemäßen Verbundanker nur vorher zugeschnittene und vorbereitete Ankerstangen gewickelt werden kann.

### Beispiel 3

### Setzen eines Dübels gemäß Fig. 1

In einen Betonwürfel der Festigkeitsklasse B 350 (Kantenlänge 20 cm) wurde zentrisch zu einer Würfelfläche eine Bohrung von 90 mm Tiefe und 12 mm Durchmesser eingebracht. Eine konventionelle Ankerstange gemäß Fig. 1 mit Gewinde M 10 (DIN 13), Gesamtlänge 130 mm, wurde mit einem gemäß Beispiel 2 hergestellten harzgetränkten Glasfasergewinde umwickelt, so daß die Ankerstange mit umwickeltem polymethanharzgetränktem Glasfasergewebe eine Dicke von 12 mm erreichte (Kontrolle durch Schieblehre), 5 sec lang in Leitungswasser getaucht und sofort 90 mm tief in das Bohrloch eingeführt. Nach 24 Stunden wurde beim Ausziehversuch eine Bruchkraft von 34,5 kN ermittelt. Der Bruch trat in Form eines kegeligen Ausbruchs im Beton auf.

### Beispiel 4

### Setzen eines Dübels gemäß Fig. 2

Auf analoge Weise wurde mit dem gleichen beharzten Glasgewirke ein Verbundanker der Variante 2 (Fig. 2) eingesetzt. Die verwendete Ankerstange hatte folgende Abmessungen:

| | |
|---|---|
| Ankerkopf: | 10 mm lang |
| | 12 mm Durchmesser |
| Verjüngung: | 80 mm Gesamtlänge |
| | davon |
| | 70 mm adhäsiv ausgerüstet |
| | 8 mm Durchmesser |
| Gewinde: | M 10 DIN 13, B1. 1 |
| | 40 mm lang |
| Gesamtlänge | 130 mm |

Die Bruchkraft betrug hier 28,1 kN. Der Bruch erfolgte im Stahlmaterial der Ankerstange am Übergang zum Kopf im Innersten der Bohrung. Als antiadhäsive Ausrüstung wurde ein silikonisiertes Papier mit der silikonisierten Seite nach außen mittels eines Klebestreifens entsprechend der Zeichnung um die verjüngte Stelle der Ankerstange geklebt.

## Patentansprüche

1. Verbundanker, bestehend aus einem Stab (2, 12) der im Fügebereich mit einem tränkbaren Material (3, 13) ummantelt ist, welches mit einem feuchtigkeitshärtenden Polyurethanharz getränkt ist.

2. Verbundanker gemäß Anspruch 1, dadurch gekennzeichnet, daß das tränkbare Material (3, 13) ein textiles Gewebe, Gewirke, Gestricke oder Vlies aus natürlichen oder synthetischen Fasern ist.

3. Verbundanker gemäß Anspruch 2, dadurch gekennzeichnet, daß das tränkbare Material (3, 13) aus metallischen oder mineralischen Fasern besteht.

4. Verbundanker gemäß den Ansprüchen 1 bis 3, dadurch gekennzeichnet, daß der Stab (2, 12) aus einem metallischen Werkstoff oder aus einem Faserverbundwerkstoff besteht.

5. Verbundanker gemäß den Ansprüchen 1 bis 4, dadurch gekennzeichnet, daß der Stab (2) im gesamten Fügebereich Formschluß mit dem feuchtigkeitshärtenden Polyurethanharz und dem tränkbaren Material (3) besitzt.

6. Verbundanker gemäß den Ansprüchen 1 bis 4, dadurch gekennzeichnet, daß der Stab (12) nur im Innersten der Bohrung die Kraft durch einen Formschluß (15, 16) in das ausgehärtete Polyurethanharz sowie das tränkbare Material (13) einleitet: im übrigen Bereich (14) jedoch antiadhäsiv ausgerüstet ist.

7. Verfahren zur Herstellung von Verbundankern gemäß Anspruch 1 bis 6, dadurch gekennzeichnet: daß man ein wasserhärtendes Polyurethanharz homogen auf das den Verbundanker umgebende Material aufbringt und den Verbundanker wasserdicht verpackt.

8. Verwendung von Verbundankern gemäß Anspruch 1 bis 6 bei Beton, Mauerwerk oder Fels.

## Claims

1. A composite anchor consisting of a rod (2,12) sheathed in the joining zone with an impregnatable material (3,13) which is impregnated with a moisture-curing polyurethane resin.

2. A composite anchor as claimed in claim 1, characterized in that the impregnatable material (3,13) is a woven or knitted textile or a nonwoven of natural or synthetic fibres.

3. A composite anchor as claimed in claim 2, characterized in that the impregnatable material (3,13) consists of metallic or mineral fibres.

4. A composite anchor as claimed in claims 1 to 3, characterized in that the rod (2,12) consists of a metallic material or of a fibre composite.

5. A composite anchor as claimed in claims 1 to 4, characterized in that the rod (2) is positively connected with the moisture-curing polyurethane resin and the impregnatable material (3) throughout the joining zone.

6. A composite anchor as claimed in claims 1 to 4, characterized in that the rod (12) only transmits the force into the cured polyurethane resin and the impregnatable material (13) in the innermost part of the bore through a positive connection (15,16), but elsewhere (14) is anti-adhesively treated.

7. A process for the production of the composite anchors claimed in claims 1 to 6, characterized in that a water-curing polyurethane resin is homogeneously applied to the material surrounding the composite anchor and the composite anchor is packed in a watertight container.

8. The use of the composite anchors claimed in claims 1 to 6 in concrete, masonry or rock.

## Revendications

1. Ancrage composite constitué d'une tige (2, 12) qui est entourée dans la région du joint par un matériau imprégnable (3, 13) qui est imprégné par une résine de polyuréthane durcissant a l'humidité.

2. Ancrage composite selon la revendication 1, caractérisé en ce que le matériau imprégnable (3, 13) est un produit textile tissé, tricoté ou maillé, ou une nappe de libres naturelles ou synthétiques.

3. Ancrage composite selon la revendication 2, caractérisé en ce que le matériau imprégnable (3, 13) est constitué de libres métalliques ou minérales.

4. Ancrage composite selon les revendications 1 à 3, caractérisé en ce que la tige (2, 12) est constituée d'un matériau métallique ou d'un matériau composite fibreux.

5. Ancrage composite selon les revendications 1 à 4, caractérisé en ce que la tige (2) présente, dans toute la région du joint, une fermeture par concordance géométrique avec la résine de polyuréthane durcissant à l'humidité et le matériau imprégnable (3).

6. Ancrage composite selon les revendications 1 à 4, caractérisé en ce que la tige (12) ne transmet la force qu'à l'intérieur du trou, grâce à une fermeture (15, 16) par concordance géométrique avec la résine de polyuréthane durcie ainsi que le matériau imprégnable (13), mais est pourvue d'un matériau antiadhésif dans l'autre région (14).

7. Procédé de fabrication d'ancrages composites selon les revendications 1 à 6, caractérisé en ce que l'on applique de manière homogène une résine de polyuréthane durcissant a l'eau sur le matériau entourant l'ancrage composite et que l'on emballe l'ancrage composite de manière étanche a l'eau.

8. Utilisation d'ancrages composites selon les revendications 1 à 6 dans le béton, la maçonnerie ou le rocher.
